Europäisches Patentamt

European Patent Office

Office européen des brevets

(19)

(11) Veröffentlichungsnummer: **0 193 624**
A1

# (12) EUROPÄISCHE PATENTANMELDUNG

(21) Anmeldenummer: **85102370.5**

(22) Anmeldetag: **02.03.85**

(51) Int. Cl.⁴: **F 03 D 9/00,** F 03 D 1/00,
B 63 H 9/00, B 63 H 13/00

(43) Veröffentlichungstag der Anmeldung: **10.09.86**
**Patentblatt 86/37**

(84) Benannte Vertragsstaaten: **AT BE CH FR GB IT LI NL SE**

(71) Anmelder: **OEKO-ENERGIE AG, Heglbachstrasse 110,
CH-8032 Zürich (CH)**

(72) Erfinder: **Wagner, Günter, Dr., Süderheide 1,
D-2282 List/Sylt (DE)**

(74) Vertreter: **Schmidt-Bogatzky, Jürgen, Dr. Ing.,
Schlossmühlendamm 4, D-2100 Hamburg 90 (DE)**

(54) **Windkraftantrieb.**

(57) Die Erfindung betrifft eine Vorrichtung zur Ausnutzung von in Land- und Seewind enthaltener Energie mit mindestens einem um eine Drehachse drehbaren Flügel, der schiefwinklig aufgerichtet zur Horizontalen angeordnet und gegebenenfalls mit einem koaxial zur Drehachse des oder der Flügel drehbar angeordneten Pylon verbunden und dessen zur Aufnahme des Flügelfußes dienenden Nabe mit zugehörigen Energieübertragungsmitteln mit einem Auflagerstück verbunden ist. Jeder Flügel des Rotors ist in einem Winkel $\beta$ von ca. 40° bis 80° zur Drehachse des Rotors angeordnet, die zur Horizontalen in einem Winkel $\alpha$ von ca. 30° bis 70° ausgerichtet ist. Das Auflagerstück ist auf einem Gestell um eine Vertikale oder eine zur Vertikalen schiefwinklig angeordnete Achse drehbar.

Die Erfindung betrifft eine Vorrichtung zur Ausnutzung von in Land- und Seewind enthaltener Energie mit mindestens einem um eine Drehachse drehbaren Flügel, der schiefwinklig aufgerichtet zur Horizontalen angeordnet und gegebenenfalls mit einem koaxial zur Drehachse des oder der Flügel drehbar angeordneten Pylon verbunden und dessen zur Aufnahme des Flügelfußes dienenden Nabe mit zugehörigen Energieübertragungsmitteln mit einem Auflagerstück verbunden ist.

Vorrichtungen zur Ausnutzung der Energie von Land- und Seewind sind seit langem in verschiedenen Ausgestaltungen bekannt. Bei landgestützten Vorrichtungen besteht das wesentliche Unterscheidungsmerkmal in der Anordnung der Drehachsen der hier zum Einsatz kommenden Rotoren. Bei Rotoren mit horizontalen Drehachsen sind - insbesondere bei Großanlagen - aufgrund der Lasten des Turms, der Gondel, Nabe, Getriebe und Generatoren aufnimmt, aufwendige bauliche Maßnahmen erforderlich, so daß derartige Rotoren, bezogen auf die Energieausbeute, einen hohen Investitionsaufwand erfordern. Rotoren mit vertikaler Drehachse nach dem Darrieus-Prinzip - bei dem die Auftriebskräfte der Blattprofile zur Umwandlung der kinetischen Energie in Rotationsenergie genutzt werden - haben lediglich bei kleineren Leistungen gegenüber Rotoren mit horizontaler Drehachse Anwendungsvorteile. Sie benötigen jedoch besondere Anlaufhilfen, wie z. B. einen Elektromotor oder aber einen Savonius-Rotor. Konstruktionsbedingt ist aber bei Vertikalläufern der auf die Flügellänge bezogene Windeinfangquerschnitt und der Wirkungsgrad geringer als bei Horizontalläufern. Um eine Leistung wie beim Horizontalläufer zu erzielen, bewirken Vertikalläufer eine größere Bauweise und damit erhöhte Kosten. Um den durch die erforderliche Konstruktion eines Turms bedingten bauseitigen Aufwand zu verringern, ist mit der GB-PS 2049831

auch vorgeschlagen worden, einen Windrotor so auszubilden, daß er bei Windanströmung von dem Boden abhebt und mittels Halteseilen in einer bestimmten Höhe gehalten werden kann. Die Halteseile sind an einer Grundplatte befestigt, auf der die Drehachse des Rotors seitlich und zur Horizontalen schiefwinklig verschwenkbar gelagert ist. An dem dem Rotor entgegengesetzten Endabschnitt der Drehachse befindet sich ein Getriebe mit einem Generator. Die Ausrichtung des Rotors zu dem anströmenden Wind soll durch eine Windfahne erfolgen, die im Bereich des Rotors an der Drehachse gelagert ist. Der Nachteil dieses Windrotors besteht darin, daß ein großer Teil der verwertbaren Windenergie zur Sicherstellung des Auftriebs des Windrotors relativ gering ist. Bei schwankender Windstärke beginnt der Windrotor ferner zu pendeln und seine Höhenlage zu variieren, so daß die Anspanneinrichtungen nachstellbar ausgebildet sein müssen, was relativ aufwendige Stellglieder erfordert. Wegen dieser Nachteile ist der in der GB-PS 2094831 beschriebene Windrotor als zur Ausnutzung der in Land- oder Seewind enthaltenen Energie ungeeignet.

Für die Ausnutzung der in Land- und Seewind enthaltenen Energie auf Gewässern ist es seit langem bekannt, Schiffe mit Segeln zu versehen. Das Voranbringen von Fahrzeugen erfolgt hierbei unter möglichst geschickter Ausnutzung der Windkraft. Dies kann entweder vor dem Wind, mit raumem Wind, mit halben Wind oder am Wind geschehen. Je nach der Takelage kann mehr oder weniger hart gegen den Wind gesegelt werden. Hierbei besteht der Nachteil, daß die Handhabung der Segel eine größere Mannschaft erfordert. Es ist deshalb schon versucht worden, starre Flügelflächen als Segel zu verwenden, was jedoch sehr materialaufwendig ist und darüber hinaus nicht zu befriedigenden Ergebnissen geführt hat.

Die Aufgabe der Erfindung besteht darin, eine Vorrichtung zur Ausnutzung von Land- und Seewind zu schaffen, die die Nachteile der bekannten Einrichtungen vermeidet, zuverlässig im Betrieb und langlebig und wartungsfrei ist und bei hohem Wirkungsgrad einen einfachen und unkomplizierten Aufbau hat und nur eine geringe Anzahl von Bedienungspersonen erfordert.

Erfindungsgemäß erfolgt die Lösung der Aufgabe dadurch, daß jeder Flügel des Rotors in einem Winkel $\beta$ von ca. 40 - 80° zur Drehachse des Rotors angeordnet ist, die zur Horizontalen in einem Winkel $\alpha$ von ca. 30 - 70° ausgerichtet ist und daß das Auflagerstück für den Rotor auf einem Gestell um eine vertikale oder eine zur Vertikalen schiefwinklig angeordnete Achse drehbar ist.

Weitere Merkmale der Erfindung werden in den Unteransprüchen beschrieben.

In den Zeichnungen sind Ausführungsbeispiele der Erfindung dargestellt. Es zeigt

Fig. 1   eine erfindungsgemäße Vorrichtung auf einem Schiff in einer schematischen Seitenansicht

Fig. 2   die Vorrichtung nach Fig. 1 als Einzelheit in einer Seitenansicht

Fig. 3   die Nabe der Vorrichtung nach Fig. 1 in einer schematischen Seitenansicht

Fig. 4  das Schiff mit der Vorrichtung nach Fig. 1 in
einer Segelstellung

Fig. 5  das Schiff nach Fig. 1 mit einer zum Antrieb
eines Generators dienenden Stellung des Rotors
der Vorrichtung nach Fig. 1

Fig. 6  die Vorrichtung nach Fig. 1 in einer anderen Betriebsstellung in einer Seitenansicht

Fig. 7a ein mögliches Profil eines Flügels der Vor-
und 7b richtung nach Fig. 1 in einer schematischen
Seitenansicht im Schnitt

Fig. 8  die Anordnung der Vorrichtung nach Fig. 1
auf einem als Wellenkraftwerk ausgebildeten
Ponton in einer schematischen Seitensicht

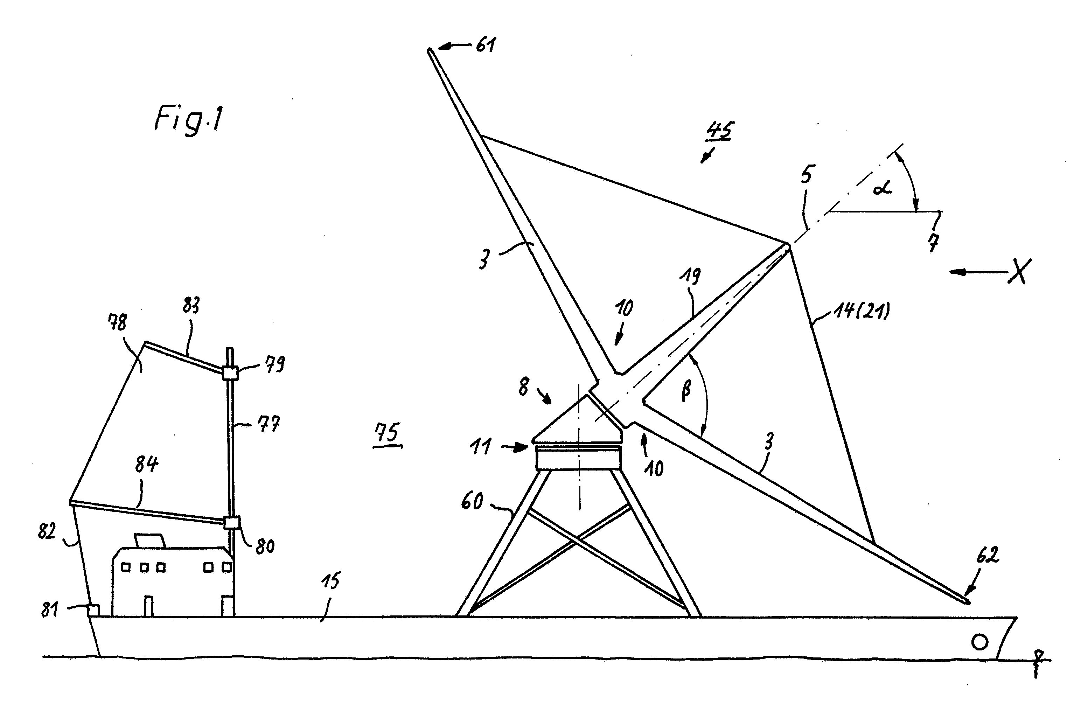

In Fig. 1 ist ein Rotor 45 dargestellt, der zum
Antrieb eines Schiffes 75 dient. Auf einem Schiffskörper 15 ist ein Gestell 60 mit einem oberen
Auflagerstück 11 angeordnet, auf dem der Rotor 45
befestigt ist. Der Rotor 45 weist einen Pylon 19
auf, an dem mittels Spannseilen 14 oder anderen
Verbindungselementen 21 zwei Flügel 3 aufgehängt
sind. Die Verbindungselemente 21 können aerodynamisch profiliert ausgebildet sein, und zum Beispiel
aus Aluminiumstrangpreßprofilen bestehen. Der Pylon
19 ist zur Horizontalen in einem Winkel $\alpha$ von 45°
angeordnet. Der Winkel $\beta$ zwischen der Drehachse 5
und den Flügeln 3 beträgt 75°. Der Rotor 45 ist so
ausgebildet, daß eine zum Vortrieb des Schiffes
dienende scheinbare Segelfläche ausgebildet wird,
die der Windanströmrichtung X ausgesetzt ist. Die
Verwendung des Rotors 45 zum Windantrieb von
Schiffen 75 weist gegenüber herkömmlichen Segeln
erhebliche Vorteile auf, da das Verhältnis der Materialfläche zu der durch Rotation gebildeten scheinbaren Segelfläche sehr groß ist und 1:25 und mehr betragen kann. Mit relativ wenig Materialaufwand kann daher eine große Segelfläche erzielt werden, deren Beherrschung nur einen geringen Personaleinsatz erfordert. Durch Verschwenken der Flügel 3 zur Drehachse 5 kann die scheinbare Segelfläche leicht den jeweiligen Windverhältnissen angepaßt werden. Hierzu kann an dem oberen Endabschnitt 17 des Pylons 19 eine Spannvorrichtung 18 vorgesehen sein, mittels derer die freie Länge der Spannseile 14 oder der Verbindungselemente 21 veränderbar ist. In diesem Fall sind die Spannseile 14 bzw. Verbindungselemente 21 an den Flügeln 3 mittels Lagern 22 gelenkig befestigt. Durch diese Ausbildung des Rotors 45 entfällt das bei üblichen Segelschiffen erforderliche Reffen von Tuchsegeln. Bei dem Rotor 45 ist es möglich, durch das Verschwenken der Flügel 3 die Umdrehungsgeschwindigkeit zu verringern, wobei im Extremfall des Stillstands des Rotors 45 nur noch die reine Flügelfläche als Windangriffsfläche vorhanden ist. Der Rotor 45 kann zusätzlich mittels einer mechanischen, hydraulischen oder elektrischen Kraftübertragungseinrichtung mit der Schiffsschraube in Wirkverbindung stehen, so daß das Schiff auch direkt gegen den Wind fahren kann. Um zu verhindern, daß Wasserströmungen den Rotor 45 aus dem Wind drehen, ist es möglich, abwindseitig zum Rotor 45 an einem Besanmast 77 ein Besansegel 78 vorzusehen (Fig. 1). Dieses Besansegel 78 ist zwischen einem oberen Mastbaum 83 und einem unteren Mastbaum 84 angeordnet. Die Mastbäume 83, 84 sind mittels Gelenken 79, 80 an dem Besanmast 77 schwenkbar. Am freien Endabschnitt des unteren Mastbaums 84 ist ein Seil 82 angeordnet, das mit einer Stelleinrichtung 81 in Verbindung steht. Durch entsprechende Betätigung der Stelleinrichtung 81 kann das Besansegel 78 so eingestellt werden, daß Wasserströmungen das Schiff 75 in seiner Lage nicht soweit verändern, daß der Rotor 45 aus dem Wind dreht. Es ist auch möglich, statt eines Besansegels 78 ein aerodynamisch geformtes Flächenelement zu verwenden, das fest oder mit einer nicht näher dargestellten Steuereinrichtung steuerbar am Besanmast 77 angeordnet sein kann.

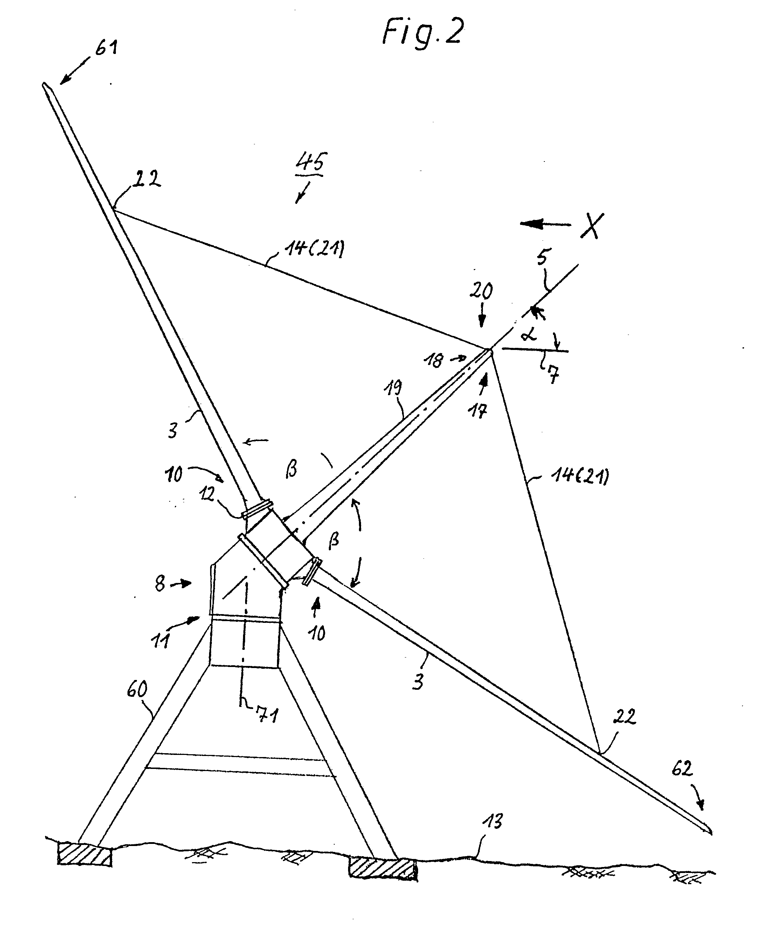

In Fig. 2 ist der Rotor 45 als Einzelheit dargestellt. Das Gestell 60 des Rotors 45 ist auf einem Nullniveau 13 abgestützt, das zum Beispiel das Deck eines Schiffes, eine Offshore-Plattform oder aber auch ein Standort an Land sein kann. Die Flügelfüße 10 der Flügel 3 sind mittels Flanschverbindungen 12 mit der Nabe 8 verbunden. In diesem Fall sind die Flügel 3 an der Nabe gelenkig gelagert. Es ist aber auch möglich, statt der Flanschverbindungen 12 Gelenkverbindungen zu verwenden, mittels der die Flügel 3 gelenkig an der Nabe 8 befestigt werden können.

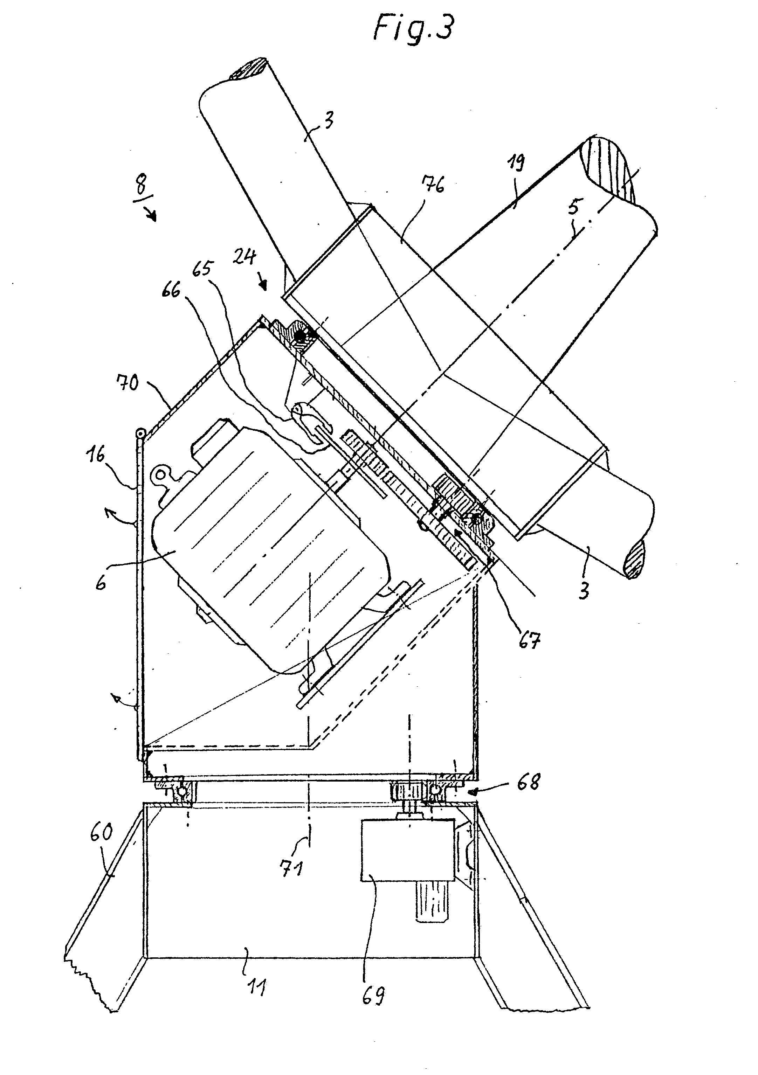

Fig. 3 zeigt eine vergrößerte Darstellung einer möglichen Ausbildung der Nabe 8. An den oberen Stützen des Gestells 60 ist ein Auflagerstück 11 ausgebildet, dessen obere Fläche als Lagerfläche für ein Azimutlager 68 dient. Das Azimutlager 68 ist mit einem Getriebe 69 verbunden, welches in dem Gehäuse des Auflagersstücks 11 angeordnet ist. Die Nabe 8 ist mittels des Azimutlagers 68 um die Drehachse 71 drehbar, die gleichzeitig die Mittelachse des Azimutlagers 68 ist. Die Nabe 8 weist ein Gehäuse 70 auf, an dem eine Klappe 16 für Wartungszwecke ausgebildet ist. Das Hauptlager 64 ist an dem oberen Endabschnitt des Gehäuses 70 ausgebildet und schiefwinklig zur Drehachse 71 angeordnet. Der Pylon 19 und die Flügel 3 sind an einem kastenförmigen Drehkranz 76 miteinander verbunden. Der Drehkranz 76 ist auf dem Hauptlager 24 abgestützt und kann ebenso wie das Gehäuse 70 rohrförmig ausgebildet sein. Bei Rotation des Drehkranzes 76 befindet sich dieser in Wirkeingriff mit einem Getriebe 76, über das ein Generator 6 angetrieben wird. Auf der Antriebswelle des Generators 6 ist eine Scheibe 66 angeordnet, die mit einem Bremsglied 65 in Wirkeingriff bringbar ist. Mittels dieses Bremsglieds 65 ist es möglich, die Rotation des Rotors 45 zu steuern.

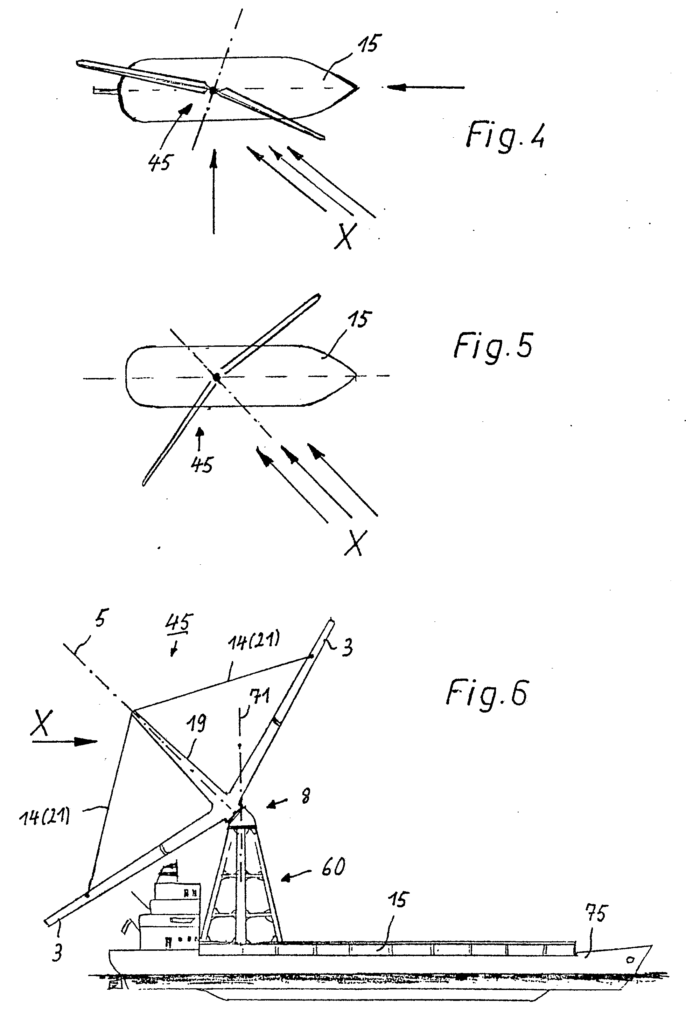

In den Figuren 4 und 5 sind zwei unterschiedliche Betriebsstellungen des Rotors 45 dargestellt. Der Rotor 45 befindet sich jeweils auf einem Schiffsrumpf 15 und wird in Bezug auf die Windanströmrichtung X gemäß Figur 4 funktional als Segel verwendet. Für den Generatorbetrieb dient die Betriebsstellung nach Figur 5.

In Figur 6 ist ein Schiff 75 mit einem Rotor 45 dargestellt, bei dem der Wind von achtern kommt. In allen den genannten Betriebsstellungen kann die effektive Windeinfangfläche dadurch vergrößert werden, daß an den Flügeln 3 zum Beispiel als Flügelstummel ausgebildete Auftriebs-Endscheiben angeordnet werden. Die durch die Rotation der Flügel 3 erzeugte Fläche bildet einen leichten Bauch, was gute Segeleigenschaften bewirkt.

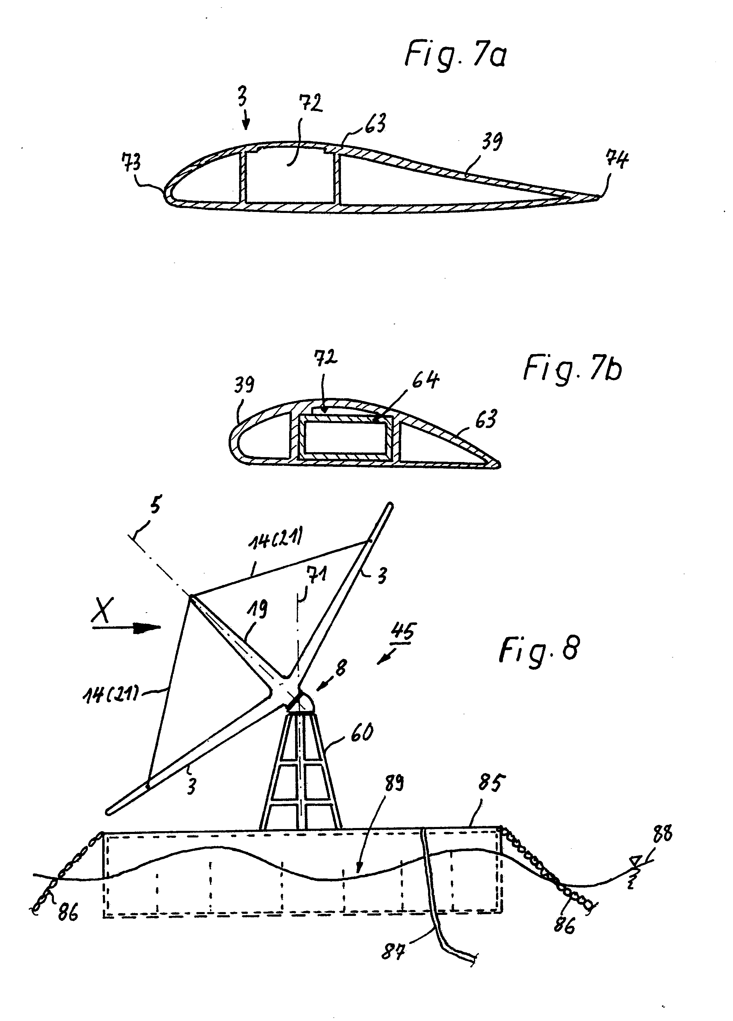

In den Figuren 7a und 7b ist ein möglicher Flügel 3 im Querschnitt dargestellt. Bei diesem Flügel 3 sind die Beplankung 39 und die Verstrebungen 47a einstückig durch Strangpressen hergestellt. Vorzugsweise wird als Material eine Aluminiumlegierung verwendet. Im Inneren sind die Strangpreßprofile 63 so gekammert, das Rechtecknormprofile 64 zur Verstärkung oder zur Bildung von Anschlußstellen an den Randseiten des Flügels 3 eingeschoben werden können. Die Rechtecknormprofile 64 können mit den Strangpreßprofilen 63 durch Schraub- oder Nietverbindungen oder Schweiß- oder Klebverbindungen verbunden sein. Durch das Strangpressen ist es möglich, ein sich von der Flügelvorderkante 73 bis zur Flügelhinterkante 74 erstreckendes einstückiges Profil zu erzielen, was darüber hinaus eine glatte Oberfläche aufweist. Zur Vergrößerung der wirksamen Flügelfläche oder aber zur Erhöhung der Steifigkeit der Flügelanordnung des Rotors 45 können die Strangpreßprofile 63 als Doppelflügel, Tandemflügel oder dergleichen angeordnet werden, wobei die einzelnen Strangpreßprofile 63 mittels gegebenenfalls aerodynamisch profilierter Verbindungsmittel miteinander verbunden sind. Vorteilhaft ist es, diese Verbindungsmittel ebenfalls aus Strangpreßprofilen herzustellen. Neben der größeren statischen Festigkeit wird die aerodynamisch wirksame Flügelfläche erhöht, so daß die spezifische Energieausbeute vergrößert wird.

Durch die erfindungsgemäße auf den jeweiligen Anwendungsfall abgestellte Kombination der in den Ansprüchen beschriebenen Merkmale wird somit eine Vorrichtung erzielt, die sowohl zur Ausnutzung von Seewind wie auch von Landwind geeignet ist und gegenüber bekannten Vorrichtungen eine erheblich größere Ausnutzung der Windenergie gestattet. Der Rotor 45 kann zur Energieerzeugung mit einem Generator 6 in Wirkverbindung und auf Schiffen, Off-Shore-Plattformen oder landgestützt in Betriebstellung gebracht werden. Es ist auch möglich, den Rotor 45 mit oder ohne Generator 6 als Energieversorgungseinrichtung für verfahrenstechnische Anlagen wie Entsalzunganlagen od. dgl. einzusetzen. In Fig. 8 ist der Einsatz des Rotors 45 in Verbindung mit einem Wellenkraftwerk schematisch dargestellt, das in einem Ponton 85 ausgebildet ist. Statt eines Ponton 85 kann auch ein Schiffsrumpf 15 zur Aufnahme des Wellenkraftwerks verwendet werden. Der Ponton 85 ist mittels Ketten 86 verankert. Ein angedeutetes Stromkabel 87 dient zur Weiterleitung der durch den Rotor 45 bzw. das Wellenkraftwerk erzeugten Energie. Bei dieser Ausführung ist es von besonderem Vorteil, daß wesentliche mechanische Teile sowohl der Windkraftanlage mit dem Rotor 45 wie auch des Wellenkraftwerks gemeinsam genutzt werden können, wodurch sich eine besonders kostengünstige Energieerzeugung ergibt. Durch entsprechende räumliche Gestaltung des Pontons 85 ist auch sichergestellt, daß bei größerem Wellengang 88 die Funktion des Wellenkraftwerks 89 und des Rotors 45 gewährleistet ist. Das Wellenkraftwerk 89 kann in bekannter Weise verschieden ausgebildet sein und ist in Fig. 8 nur durch Strichlinien angedeutet.

- 10 -    0193624

**P A T E N T A N S P R Ü C H E**

1. Vorrichtung zur Ausnutzung von in Land- und Seewind enthaltener Energie mit mindestens einem um eine Drehachse drehbaren Flügel, der schiefwinklig aufgerichtet zur Horizontalen angeordnet und gegebenenfalls mit einem koaxial zur Drehachse des oder der Flügel drehbar angeordneten Pylon verbunden und dessen zur Aufnahme des Flügelfußes dienende Nabe mit zugehörigen Energieübertragungsmitteln mit einem Auflagerstück verbunden ist, dadurch gekennzeichnet, daß jeder Flügel (3) des Rotors (45) in einem Winkel $\beta$ von ca. 40° - 80° zur Drehachse (5) des Rotors (45) angeordnet ist, die zur Horizontalen (7) in einem Winkel $\alpha$ von ca. 30° - 70° ausgerichtet ist und daß das Auflagerstück (11) auf einem Gestell (60) um eine vertikale oder eine zur Vertikalen schiefwinklig angeordnete Achse drehbar ist.

2. Vorrichtung nach Anspruch 1, dadurch gekennzeichnet, daß die Flügel (3) des Rotors (45) derart auf einem Schiffsrumpf (15) angeordnet sind, daß durch die rotierenden Flügel (3) eine scheinbare zum Vortrieb des Schiffes dienende Segelfläche ausgebildet wird.

3. Vorrichtung nach Anspruch 2, dadurch gekennzeichnet, daß der Rotor (45) mittels einer mechanischen, hydraulischen oder elektrischen Kraftübertragungseinrichtung mit einer Schiffsschraube in Wirkverbindung steht.

4. Vorrichtung nach Anspruch 1 bis 3, dadurch gekennzeichnet, daß der Rotor mit einer schrägstehenden Schiffsschraube oder über ein Umlenkgetriebe mit einer horizontal angeordneten Schiffsschraube verbunden ist.

5. Vorrichtung nach Anspruch 2 bis 4, dadurch gekennzeichnet, daß der Winkel $\alpha$ etwa 45° und der Winkel $\beta$ etwa 75° beträgt.

6. Vorrichtung nach Anspruch 2 bis 5, dadurch gekennzeichnet, daß der Rotor (45) auf einem Azimutlager (68) drehbar gelagert ist.

7. Vorrichtung nach Anspruch 2 bis 6, dadurch gekennzeichnet, daß zur Vergrößerung der effektiven Windeinfangfläche an den Endabschnitten (61, 62) der Flügel (3) als Flügelstummel ausgebildete Auftriebs-Endscheiben angeordnet sind.

8. Vorrichtung nach Anspruch 1 bis 7, dadurch gekennzeichnet, daß zur Ausbildung einer Torsion der Flügel (3) in Abhängigkeit von Zentrifugalkraft oder Windkraft zur Drehzahlregelung die zwischen Pylon (19) und Flügeln (3) zur Ableitung radialer und tangentialer Kräfte angeordneten Spannseile (14) und/oder Verbindungselemente (21) exzentrisch zu den Flügelschwerpunkten an den Flügel (3) befestigt sind.

9. Vorrichtung nach Anspruch 8, dadurch gekennzeichnet, daß die Spannseile (14) und/oder Verbindungselemente (21) außerhalb des aerodynamischen Druckpunkts vor oder hinter dem Schwerpunkt eines jeden Flügels (3) des Rotors (45) gelenkig oder elastisch befestigt sind.

10. Vorrichtung nach Anspruch 8 und 9, dadurch gekennzeichnet, daß die Spannseile (14) und/oder Verbindungselemente (21) mittels passiver Stellelemente wie Federn oder aktiver Stellelemente wie Hydraulikzylinder, motorischer Antriebe oder mit dem Pylon (19) verbundener Zwangssteuerungen zur Winkelverstellung des oder der Flügel (3) betätigbar sind.

11. Vorrichtung nach Anspruch 10, dadurch gekennzeichnet, daß die Flügel (3) als Strangpreßprofil (63) mit integrierten Verstrebungen (47a) ausgebildet sind.

12. Vorrichtung nach Anspruch 11, dadurch gekennzeichnet, daß in den Flügeln (3) durch die Verstrebungen (47a) mindestens eine Ausnehmung (72) ausgebildet ist, in die zur Verstärkung der Flügelfestigkeit oder zur Bildung seitlicher Anschlußstellen vorzugsweise Rechtecknormprofile (64) einschiebbar und mit dem Strangpreßprofil (63) verbindbar sind.

13. Vorrichtung nach Anspruch 11 und 12, dadurch gekennzeichnet, daß die Strangpreßprofile (63) zur Vergrößerung der wirksamen Flügelfläche oder zur Erhöhung der Steifigkeit der Flügelanordnung als Doppelflügel, Tandemflügel od. dgl. angeordnet sind, wobei die einzelnen Strangpreßprofile (63) mittels gegebenenfalls aerodynamisch profilierter Verbindungsmittel miteinander verbunden sind.

14. Vorrichtung nach Anspruch 13, dadurch gekennzeichnet, daß die aerodynamisch profilierten Verbindungsmittel als Strangpreßprofile ausgebildet sind.

15. Vorrichtung nach Anspruch 2 bis 4, dadurch gekennzeichnet, daß zum Rotor (45) abwindseitig an einem Besanmast (77) od. dgl. ein Besansegel (78) oder eine aerodynamisch geformtes Flächenelement fest
oder steuerbar angeordnet ist.

16. Vorrichtung nach Anspruch 1 bis 15, dadurch
gekennzeichnet, daß der Rotor (45) zur Energieerzeugung mit einem Generator (6) in Wirkverbindung
und auf Schiffen, Offshore-Plattformen oder landgestützt in Betriebsstellung bringbar ist.

17. Vorrichtung nach Anspruch 1 bis 16, dadurch
gekennzeichnet, daß der Rotor (45) mit oder ohne
Generator (6) als Energieversorgungseinrichtung für
verfahrenstechnische Anlagen wie Entsalzungsanlagen
od. dgl. eingesetzt wird.

18. Vorrichtung nach Anspruch 1 bis 17, dadurch gekennzeichnet, daß der Rotor (45) auf einem als Schiffsrumpf (15) oder Ponton (85) ausgebildeten Schwimmkörper angeordnet ist, in dem ein Wellenkraftwerk
(89) ausgebildet.

Fig.1

*Fig.2*

Fig.3

*Fig.4*

*Fig.5*

*Fig.6*

Fig. 7a

Fig. 7b

Fig. 8

Europäisches
Patentamt

EUROPÄISCHER RECHERCHENBERICHT

0193624

Nummer der Anmeldung

EP 85 10 2370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | DE-A-3 332 810 (OKO-ENERGIE A.G.) <br> * Ganzes Dokument * | 1-18 | F 03 D 9/00 <br> F 03 D 1/00 <br> B 63 H 9/00 <br> B 63 H 13/00 |
| X | EP-A-0 077 914 (ÖKO-ENERGIE A.G.) <br><br> * Ganzes Dokument * | 1,3,5, 6,8-14 ,16 | |
| A | | 18 | |
| Y | | 4,2 | |
| Y | NL-A-8 002 427 (H. SCHUTTE) <br> * Figuren; Anspruch 1 * | 2 | |
| Y | EP-A-0 024 998 (J.P. VIDAL) <br> * Figuren 1,10 * | 4 | RECHERCHIERTE SACHGEBIETE (Int. Cl.4) |
| Y | GB-A- 209 175 (T.C. THOMSEN) <br> * Figuren 1-6 * | 4 | F 03 D <br> B 63 H |
| A | POPULAR SCIENCE, Band 222, Nr. 6, Juni 1983, Seiten 76 bis 79, New York, US; J. SCHEFTER: "Energy experts pick 5 wild windmills" <br> * Seite 77, linke Figur * | 7 | |

--- -/-

Der vorliegende Recherchenbericht wurde für alle Patentansprüche erstellt.

| Recherchenort <br> DEN HAAG | Abschlußdatum der Recherche <br> 31-10-1985 | Prüfer <br> THIBO F. |
|---|---|---|

Europäisches Patentamt

**EUROPÄISCHER RECHERCHENBERICHT**

| | EINSCHLÄGIGE DOKUMENTE | | | Seite 2 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int Cl 4) |
| A | DE-C- 907 400 (R. BAUER) | | | |
| | ----- | | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 31-10-1985 | Prüfer THIBO F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82